# EUROPEAN PATENT APPLICATION

(11) **EP 4 141 644 A1**
(43) Date of publication of application: **01.03.2023**
(21) Application number: 22794475.8
(22) Date of filing: 30.03.2022
(51) Int. Cl.: G06F 3/14

(54) **DATA TRANSMISSION METHOD AND DATA TRANSMISSION DEVICE**

(30) Priority: 25.04.2021 CN 202110449956
(71) Applicant: Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: HUANG, Sheng, Guangzhou, Guangdong 510530 (CN)
(74) Representative: Grünecker Patent- und Rechtsanwälte PartG mbB
(86) International application number: PCT/CN2022/083948
(87) International publication number: WO 2022/228002

(57) **Abstract**

The present disclosure provides a data transmission method and a data transmission apparatus. By setting a first communication module and a second communication module supporting the same first communication protocol in the data transmission apparatus, when the data transmission apparatus transmits media data between an electronic apparatus and an interactive white board, the electronic apparatus can control the first communication module to send the media data to the second communication module using the first communication protocol, and then the second communication module can directly send the media data to the interactive white board using first communication protocol, thereby reducing the time when the data transmission apparatus transmits the media data and the possibility of error during protocol conversion of the media data, and further improving the transmission efficiency and transmission quality of the data transmission apparatus when transmitting the media data.

## Description

The present disclosure claims the priority of Chinese Patent Application with the application No. 202110449956.X and the title of "Data Transmission Method and Data Transmission Apparatus", which is filed to the CNIPA on April 25, 2021, and the entire content of which is incorporated in the present disclosure by reference.

### FIELD

The present disclosure relates to the field of electronic technology, and in particular to a data transmission method and data transmission apparatus.

### BACKGROUND

In order to help people communicate in meetings, traditional technologies provide many technical solutions, for example, projecting a presentation file onto a screen for display and sharing, remote instant messaging, and providing a writing canvas with a large-screen touch tablet, or the like. Another way is to use a data transmission apparatus, wherein the data transmission apparatus is connected to an electronic apparatus (including a notebook computer, a tablet computer, a desktop computer, and a mobile phone, etc.) of a user via a connection line, and transmits media data (including display picture data and audio data) in the electronic apparatus of the user to an interactive white board in a conference room for display.

In the prior art, since the interactive white board is usually installed on the wall of the conference room and not easy to move, and the volume of the data transmission apparatus is designed to be smaller and smaller and easy to carry, the data transmission apparatus can be connected to the electronic apparatus in a wired manner such as Universal Serial Bus (USB), and connected to the interactive white board in a wireless communication manner such as Wireless Fidelity (Wi-Fi) or Bluetooth. When the user uses the data transmission apparatus, after the data transmission apparatus is connected to the electronic apparatus via the connection line, the electronic apparatus may send the media data to the data transmission apparatus via a USB connection line, and then the data transmission apparatus sends the media data to the interactive white board in a wireless communication manner such as Wi-Fi to complete the entire process of media data transmission.

However, in the prior art, since the data transmission apparatus receives the media data via the USB connection line and sends the media data via Wi-Fi, the data transmission apparatus needs to convert the protocol format supported by the media data when transmitting the media data, which not only increases the time when transmitting the media data, but also increases the possibility of error when converting the media data, thereby reducing the transmission efficiency and transmission quality of the data transmission apparatus when transmitting the media data.

### SUMMARY

The present disclosure provides a data transmission method and a data transmission apparatus, so as to solve technical problems in the prior art in which the data transmission apparatus has low transmission efficiency and transmission quality when transmitting media data.

A first aspect of the present disclosure provides a data transmission method applied to a data transmission apparatus, wherein the data transmission apparatus comprises a first communication module and a second communication module, both the first communication module and the second communication module transmit data using a first communication protocol; the method comprises: the first communication module acquiring media data from an electronic apparatus; the first communication module sending the media data to the second communication module using the first communication protocol; and the second communication module receiving the media data and sending the media data to an interactive white board using the first communication protocol.

In an embodiment of the first aspect of the present disclosure, the first communication module comprises a USB network card, the USB network card is connected to the electronic apparatus via a USB connection line, and the first communication module acquiring the media data from the electronic apparatus comprises: the USB network card receiving the media data sent by the electronic apparatus via the USB connection line.

In an embodiment of the first aspect of the present disclosure, the first communication protocol comprises an Ethernet communication protocol, and a communication connection relationship of bridge or network address translation (NAT) is established between the first communication module and the second communication module.

A second aspect of the present disclosure provides a data transmission method applied to an electronic apparatus, wherein the electronic apparatus is configured to send media data to a data transmission apparatus so that the data transmission apparatus transmits the media data to an interactive white board, the data transmission apparatus comprises a first communication module and a second communication module, both the first communication module and the second communication module transmit data using a first communication protocol; the method comprises: determining that the electronic apparatus is connected to the first communication module of the data transmission apparatus; and controlling the first communication module to send the media data to the second communication module using the first communication protocol, so that the second communication module sends the media data to the interactive white board using the first communication protocol.

In an embodiment of the second aspect of the present disclosure, the first communication module comprises a USB network card, the electronic apparatus is connected to the USB network card via a USB connection line, and determining that the electronic apparatus is connected to the first communication module of the data transmission apparatus comprises: detecting, through USB enumeration, that the electronic apparatus is connected to the USB network card of the data transmission apparatus via the USB connection line.

In an embodiment of the second aspect of the present disclosure, controlling the first communication module to send the media data to the second communication module using the first communication protocol comprises: sending the media data to the first communication module via the USB connection line, and controlling the first communication module to send the media data to the second communication module using the first communication protocol.

In an embodiment of the second aspect of the present disclosure, the first communication protocol comprises an Ethernet communication protocol.

In an embodiment of the second aspect of the present disclosure, after determining that the electronic apparatus is connected to the first communication module of the data transmission apparatus, the method further comprises: controlling the first communication module to send a dynamic host configuration protocol (DHCP) to the interactive white board; and receiving, by the first communication module, an IP address assigned to the electronic apparatus by the interactive white board, wherein the IP address is used by the electronic apparatus to control the first communication module to transmit data using the Ethernet communication protocol.

A third aspect of the present disclosure provides a data transmission apparatus, which may be configured to execute the data transmission method according to the embodiment of the first aspect of the present disclosure, the data transmission apparatus comprising a first communication module and a second communication module, wherein the first communication module is configured to acquire media data from an electronic apparatus, and send the media data to a second communication module using a first communication protocol; and the second communication module is configured to receive the media data and send the media data to an interactive white board using the first communication protocol.

In an embodiment of the third aspect of the present disclosure, the first communication module comprises a USB network card, wherein the USB network card is connected to the electronic apparatus via a USB connection line; the first communication module is specifically configured to make USB network card receive the media data sent by the electronic apparatus via the USB connection line.

In an embodiment of the third aspect of the present disclosure, the first communication protocol comprises an Ethernet communication protocol, and a communication connection relationship of bridge or network address translation (NAT) is established between the first communication module and the second communication module.

A fourth aspect of the present disclosure provides an electronic apparatus which may be configured to execute the data transmission method according to the second aspect of the present disclosure, the electronic apparatus comprising a communication interface and a processing module, wherein the communication interface is configured to communicate with a first communication module of a data transmission apparatus; and the processing module is configured to determine that the communication interface is connected to the first communication module of the data transmission apparatus, and control, by the communication interface, the first communication module to send media data to a second communication module using a first communication protocol, so that the second communication module sends the media data to an interactive white board using the first communication protocol.

In an embodiment of the fourth aspect of the present disclosure, the first communication module comprises a USB network card, the electronic apparatus is connected to the USB network card via a USB connection line; the processing module is specifically configured to detect, through USB enumeration, that the electronic apparatus is connected to the USB network card of the data transmission apparatus via the USB connection line.

In an embodiment of the fourth aspect of the present disclosure, the processing module is specifically configured to send the media data to the first communication module via the USB connection line, and control the first communication module to send the media data to the second communication module using the first communication protocol.

In an embodiment of the fourth aspect of the present disclosure, the first communication protocol comprises an Ethernet communication protocol.

In an embodiment of the fourth aspect of the present disclosure, the processing module is further configured to: send, by the communication interface, a dynamic host configuration protocol (DHCP) to the interactive white board; and receiving, by the communication interface, an IP address assigned to the electronic apparatus by the interactive white board, wherein the IP address is used by the electronic apparatus to transmit data using the Ethernet communication protocol.

A fifth aspect of the present disclosure provides a data transmission system comprising: the electronic apparatus according to any one of the fourth aspect of the present disclosure and the data transmission apparatus according to any one of the third aspect of the present disclosure; for example, the electronic apparatus may be configured to connect the first communication module of the data transmission apparatus and control the first communication module to send media data to the second communication module using the first communication protocol; and the data transmission apparatus may be configured to send, by the second communication module, the media data to an interactive white board using the first communication protocol.

In summary, with the data transmission method and the data transmission apparatus according to the embodiments of the present disclosure, when the electronic apparatus sends the media data to the interactive white board through the data transmission apparatus, since the electronic apparatus can directly control the first communication module in the data transmission apparatus to send the media data of the first communication protocol, and the second communication module can continue to send the media data to the interactive white board using the first communication protocol, the data transmission apparatus does not need to perform protocol conversion on the media data in the entire process of each transmission of media data, thereby reducing the time when the data transmission apparatus transmits the media data, reducing the time delay when the data transmission apparatus transmits the media data each time, and further improving the transmission efficiency of the data transmission apparatus when transmitting the media data. Meanwhile, since the data transmission apparatus omits the protocol conversion step, the possibility of error when performing protocol conversion on the media data can be reduced, and the transmission quality of the media data transmitted by the data transmission apparatus can be further improved.

### BRIEF DESCRIPTION OF THE DRAWINGS

In order to describe the technical solutions in the embodiments of the present disclosure or the prior art more clearly, the accompanying drawings required in the description of the embodiments or the prior art will be briefly introduced below. Obviously, the accompanying drawings in the description below are merely some embodiments of the present disclosure, and for those of ordinary skill in the art, other drawings may be obtained from these drawings without creative efforts.
Fig. 1 is a schematic diagram of an application scenario according to the present disclosure;
Fig. 2 is a schematic diagram of structures of a data transmission apparatus;
Fig. 3 is a schematic diagram of flows of a data transmission method;
Fig. 4 is a schematic diagram of structures of an embodiment of a data transmission apparatus according to the present disclosure;
Fig. 5 is a schematic diagram of flows of an embodiment of a data transmission method according to the present disclosure; and
Fig. 6 is a schematic diagram of usage states of a data transmission apparatus according to the present disclosure.

### DESCRIPTION OF THE PREFERRED EMBODIMENT

The technical solutions in the embodiments of the present disclosure will be described clearly and completely below with reference to the accompanying drawings in the embodiments of the present disclosure. Obviously, the described embodiments are only some but not all of the embodiments of the present disclosure. Based on the embodiments of the present disclosure, all other embodiments obtained by those of ordinary skill in the art without creative efforts shall fall within the scope of protection of the present disclosure.

The terms "first", "second", "third", "fourth" and the like (if any) in the description, claims and drawings of the present disclosure are used to distinguish similar objects, and are not necessarily used to describe a specific order or sequence. It should be understood that the data so used may be interchanged under appropriate situations so that the embodiments of the present disclosure described herein, for example, can be implemented in an order other than those illustrated or described herein. In addition, the terms "include" and "have", and any variations thereof, are intended to cover a non-exclusive inclusion, for example, a process, method, system, product, or apparatus that includes a series of steps or units is not necessarily limited to those steps or units that are expressly listed, but may include other steps or units that are not expressly listed or inherent to such process, method, product, or apparatus.

Before formally introducing the embodiments of the present disclosure, the application scenarios of the present disclosure and the deficiencies in some techniques are introduced with reference to the accompanying drawings.

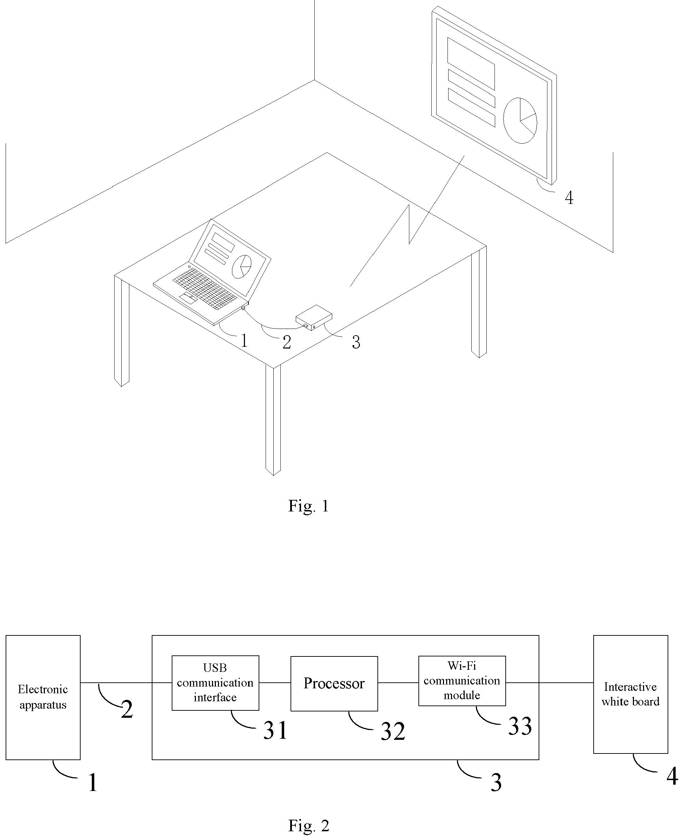

Fig. 1 is a schematic diagram of an application scenario of the present disclosure, wherein taking a scenario in which a user needs to share a presentation file in an electronic apparatus 1 at a conference as an example. Due to the limitation of the screen size of the electronic apparatus 1, the user can connect the electronic apparatus 1 to a data transmission apparatus 3 by using a connection line 2, and then , through the data transmission apparatus 3, pictures of the presentation file displayed in a display interface of the electronic apparatus 1 are transmitted to an interactive white board 4 hung on the wall for display.

Wherein the electronic apparatus 1 may be an apparatus having a display interface such as a notebook computer, a tablet computer, a desktop computer, or a workstation. The data transmission apparatus 3 may also be referred to as a screen projection apparatus, a screen projector, a wireless screen projector, a screen transmitter, a wireless screen transmitter, or the like. The interactive white board 4 may also be referred to as an intelligent interactive white board, an intelligent interactive tablet, an interactive whiteboard, a large screen white board, or the like. The data transmission apparatus 3 and the interactive white board 4 may be connected in a wireless communication manner, and the wireless communication manner includes but not limited to Wireless Fidelity (Wi-Fi), Bluetooth, or other short-range wireless communication manners. The interactive white board 4 can cooperate with the data transmission apparatus 3 to implement sharing of presentation files in the electronic apparatus 1. In some embodiments, the interactive white board 4 can also separately implement functions such as remote instant messaging and providing a writing canvas through a touch panel. In some implementations, the data transmission apparatus 3 and the interactive white board 4 may be provided by the same manufacturer, and the user may purchase the data transmission apparatus 3 and the interactive white board 4 at the same time, installs the interactive white board 4 onto the wall of the conference room, and then makes the data transmission apparatus 3 transmit pictures on the display interface of the electronic apparatus 1 to the conference white board 4 for display.

The electronic apparatus 1 and the data transmission apparatus 3 are capable of data communication, for example, a connection line 2 may be provided between the electronic apparatus 1 and the data transmission apparatus 3 to be connected to each other in a wired communication manner. The connection line 2 may be a Universal Serial Bus (USB) connection line, a High Definition Multimedia Interface (HDMI) connection line, a network cable, or the like. In one embodiment, the USB connection line may be a USB Type-C connection line.

In some embodiments, the connection line 2 may be provided separately from the data transmission apparatus 3, and the connection line 2 may be provided by a vendor of the data transmission apparatus 3 or purchased separately by a user. In other embodiments, the connection line 2 may be provided integrally with the data transmission apparatus 3, that is, the connection line 2 and the data transmission apparatus 3 together form an integral apparatus, at this point, the connection line 2 may be regarded as a part of the data transmission apparatus 3. In this way, when the user connects the data transmission apparatus 3 to the electronic apparatus 1, the step of connecting the data transmission apparatus 3 to one end of the connection line 2 may be omitted, and the electronic apparatus 1 only needs to be connected to the other end of the connection line, thereby improving efficiency, and avoiding a case where the data transmission apparatus 3 cannot be connected to the electronic apparatus 1 because the connection line 2 cannot be found.

In the scenario shown in Fig. 1, since the interactive white board 4 is usually installed on the wall of the conference room and not easy to move, and the volume of the data transmission apparatus 3 is designed to be smaller and smaller and easy to carry, the data transmission apparatus 3 is usually connected to the electronic apparatus 1 through a wired manner such as a USB connection line 2, and connected to the interactive white board 4 through a wireless communication manner such as a Wi-Fi or a Bluetooth.

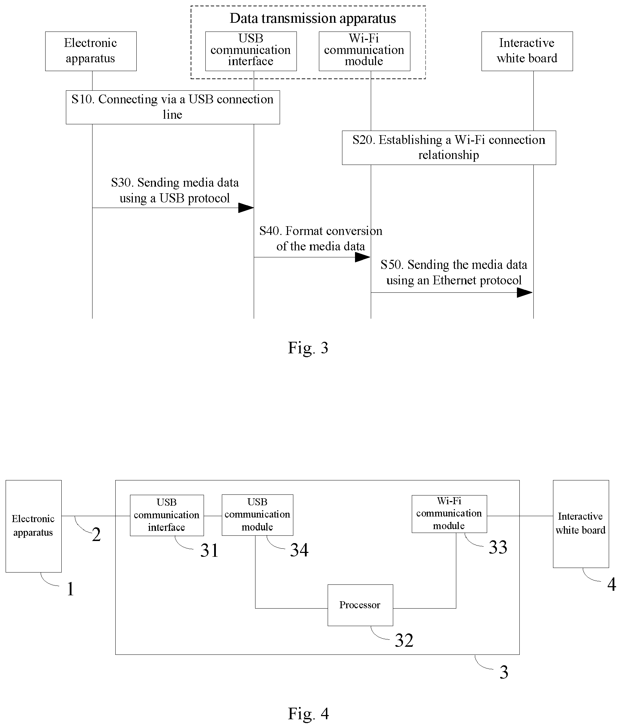

In some embodiments, Fig. 2 is a schematic diagram of structures of a data transmission apparatus. The data transmission apparatus 3 shown in Fig. 2 includes a USB communication interface 31, a processor 32, and a Wi-Fi communication module. When a user applies the data transmission apparatus 3 shown in Fig. 2 to the scenario shown in Fig. 1 to implement a screen projection function, the overall flow may be shown in Fig. 3.

Fig. 3 is a schematic diagram of flows of a data transmission method, wherein the structure of the data transmission apparatus is shown in Fig. 2. Specifically, when the user uses the data transmission apparatus 3 to project the screen, the electronic apparatus 1 is first connected to the USB communication interface 31 of the data transmission apparatus 3 via the USB connection line 2 in S10, and then after detecting, through USB enumeration, that the USB communication interface 31 is connected to the electronic apparatus 1 via the USB connection line 2 in S 10, the data transmission apparatus 3 establishes a Wi-Fi connection relationship with the interactive white board 4 through the Wi-Fi communication module 33 in S20. After the data transmission apparatus 3 establishes a wired connection relationship with the electronic apparatus 1 and a wireless connection relationship with the interactive white board 4, the electronic apparatus 1 may send the media data (including the current display picture data and audio data of the electronic apparatus 1, etc.) to the data transmission apparatus 3 via the USB connection line 2 using a USB protocol in S30, and accordingly, the processor 32 of the data transmission apparatus 3 receives the media data sent by the electronic apparatus 1 through the USB communication interface 31. Since the media data received by the processor 32 at this point supports a Wi-Fi protocol and cannot be transmitted through an Ethernet protocol supported by the Wi-Fi communication module, the processor 32 needs to convert the format of the media data in S40, so that the media data supporting the Wi-Fi protocol is converted into media data supporting the Ethernet protocol. Finally, the processor 32 sends the media data supporting the Ethernet protocol to the Wi-Fi communication module 33, and the Wi-Fi communication module 33 sends the media data to the interactive white board 4 using the Ethernet protocol in S50. After receiving the media data, the interactive white board 4 may display/play the media data after performing processing such as decoding and rendering.

In summary, in the data transmission method shown in Fig. 3, since the connection method between the data transmission apparatus and the electronic apparatus is different from that between the data transmission apparatus and the interactive white board, when the data transmission apparatus transmits the media data between the electronic apparatus and the interactive white board, the communication protocol supported by the data received by the data transmission apparatus from the electronic apparatus is different from that supported by the data sent by the data transmission device to the interactive white boar, so that the data transmission apparatus needs to convert the protocol format supported by the media data when implementing the screen projection function. This step not only increases the time when the data transmission apparatus transmits the media data, but also increases the possibility of error when performing protocol conversion on the media data, and further reduces the transmission efficiency and transmission quality of the data transmission apparatus when transmitting the media data.

Therefore, the present disclosure provides a data transmission method and a data transmission apparatus, in which a first communication module and a second communication module supporting the same first communication protocol and provided in the data transmission apparatus are respectively connected to the electronic apparatus and the interactive white board, so that when the data transmission apparatus transmits media data between the electronic apparatus and the interactive white board, the electronic apparatus can control the first communication module to send the media data to the second communication module using the first communication protocol, and then the second communication module can directly send the media data to the interactive white board using the first communication protocol. And in this process, the data transmission apparatus does not need to perform processing such as protocol conversion on the media data, thereby reducing the time when the data transmission apparatus transmits the media data and reducing the possibility of error when performing protocol conversion on the media data, and further improving the transmission efficiency and transmission quality of the data transmission apparatus when transmitting the media data.

The following describes the technical solutions of the present disclosure in detail using specific embodiments. The following specific embodiments may be combined with each other, and the same or similar concepts or processes may not be repeated in some embodiments.

Specifically, the data transmission apparatus 3 according to this embodiment can be applied to the scenario shown in Fig. 1, and the data transmission apparatus includes at least two communication modules, denoted as a first communication module and a second communication module, wherein the data transmission apparatus 3 is connected to the electronic apparatus 1 through the first communication module and to the interactive white board 4 through the second communication module. Meanwhile, the first communication module and the second communication module support the same communication protocol, denoted as the first communication protocol. That is, the electronic apparatus can send data to the first communication module using the first communication protocol, and the second communication module can send data to the interactive white board using the first communication protocol.

In a possible implementation, Fig. 4 is a schematic diagram of structures of an embodiment of a data transmission apparatus according to the present disclosure. The data transmission apparatus shown in Fig. 4 may be applied to the scenario shown in Fig. 1, and connected to the electronic apparatus 1 via a connection line 2 as the data transmission apparatus 3, and may be configured to transmit media data of the electronic apparatus 1 to the interactive white board 4.

In the example shown in Fig. 4, the first communication module may be a USB communication module 34, and the second communication module may be a Wi-Fi communication module 33. Wherein the USB communication module 34 may be specifically a USB network card, which may be implemented by a hardware entity module provided in the data transmission apparatus 3, or may be implemented by a software program running in the processor 32 of the data transmission apparatus 3, so that the USB communication module 34 can transmit data through a USB interface using an Ethernet communication protocol. In the data transmission apparatus 3, the USB communication module 34 is also connected to the USB communication interface 31, and is connected to the electronic apparatus 1 through the USB communication interface 31 and the connection line 2 in sequence. Since both the USB communication module 34 and the Wi-Fi communication module support the same Ethernet communication protocol, the electronic apparatus 1 can send the media data supporting the Ethernet protocol to the USB communication module 34, and the Wi-Fi communication module 33 can also send the media data supporting the Ethernet protocol to the interactive white board 4.

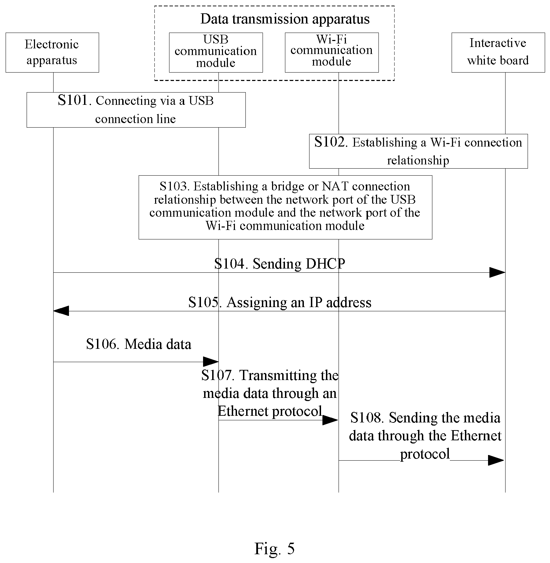

More specifically, Fig. 5 is a schematic diagram of flows of an embodiment of a data transmission method according to the present disclosure. The data transmission method shown in Fig. 5 may be applied to the scenario shown in Fig. 1 and implemented by an electronic apparatus 1, an interactive white board 4, and a data transmission apparatus 3 shown in Fig. 4. As shown in Fig. 5, the data transmission method according this embodiment comprises:

S 101. Connecting the electronic apparatus 1 to the USB communication module 34 in the data transmission apparatus 3 through the USB connection line 2 and the USB communication interface 31, and establishing a communication connection relationship between the electronic apparatus 1 and the USB communication module 34 through the USB connection line and the USB communication interface 31, denoted as a first connection relationship.

Wherein in S101, the user may connect the electronic apparatus 1 to the data transmission apparatus 3 using the USB connection line 2. Specifically, the user may connect one end of the USB connection line 2 to a USB communication interface in the electronic apparatus 1, and connect the other end of the USB connection line 2 to the USB communication interface 31 of the data transmission apparatus 3. Then, the electronic apparatus 1 can read, by a processing module such as a processor of the electronic apparatus 1 in a USB enumeration manner, that the USB communication interface of the electronic apparatus 1 is connected to the USB communication module 34 of the data transmission apparatus 3. At the same time, since the USB communication interface 31 of the data transmission apparatus 3 is also connected to the USB communication module 34, the electronic apparatus 1 can also read, during USB enumeration, that the USB interface is connected to the USB communication module 34, and thus can subsequently use the USB communication module 34 for communication. And the electronic apparatus 1 may perform an operation such as initialization on the USB communication module 34 via the USB connection line 2, so that a communication connection relationship, denoted as a first connection relationship, is established between the electronic apparatus 1 and the USB communication module 34, and based on the first connection relationship, the electronic apparatus may use the USB communication module 34 to perform communication. A specific implementation of establishing the first connection relationship is not limited in this embodiment, and reference may be made to a process in the related art in which when the electronic apparatus is connected to a USB network card, a connection is established between the electronic apparatus and the USB network card so that the electronic apparatus can use the USB network card.

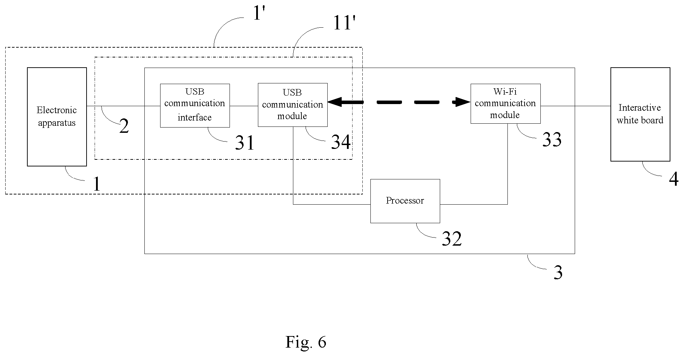

For example, Fig. 6 is a schematic diagram of usage states of a data transmission apparatus according to the present disclosure, wherein the process of S101 can be understood as a process in which the electronic apparatus 1 is connected to a USB communication module 34 (USB network card) and further uses the USB network card. When the electronic apparatus 1 uses the USB communication module 34 for communication, transmission of underlying data between the electronic apparatus 1 and the USB communication module 34 may be performed using a USB protocol. And after the electronic apparatus 1 is connected to the data transmission apparatus 3 via the USB connection line 2, the electronic apparatus 1 is connected to the USB communication module 34 through the USB connection line 2 and the USB communication interface 31. At this point, this is equivalent to installing a USB network card in the electronic apparatus 1, so that the USB communication module 34 can work as a part of the electronic apparatus 1, and the electronic apparatus 1' having installed the USB network card (i.e., the electronic apparatus 1' shown in dashed line in the figure) can transmit data supporting the Ethernet protocol through the USB network card. In the electronic apparatus 1', the connection line 2, the USB communication interface 31 and the USB communication module 34 can be "regarded" as an integral communication module 11', and the electronic apparatus 1' can transmit data through the communication module 11' using the Ethernet protocol. It should be noted that the virtual electronic apparatus 1' and communication module 11' represented by dashed lines in Fig. 6 only logically belong to a virtual inclusion relationship, and in the physical structure, the USB communication interface 31 and the USB communication module 34 are still provided in the data transmission apparatus 3.

S102. The Wi-Fi communication module 33 in the data transmission apparatus 3 establishes a connection relationship with the interactive white board 4, denoted as a third connection relationship.

Wherein the Wi-Fi communication module 33 may specifically establish a Wi-Fi connection relationship with the interactive white board 4 in a wireless communication manner, and maintain the established Wi-Fi connection relationship after S102. A specific process of establishing the Wi-Fi connection relationship is not limited in this embodiment, and may be executed by the processor 32 controlling the Wi-Fi communication module 33.

S103. Establishing a second connection relationship between the USB communication module 34 and the Wi-Fi communication module 33 by bridging or network address translation (NAT).

Wherein since both the USB communication module 34 and the Wi-Fi communication module 33 support the Ethernet protocol, a connection relationship of bridge or NAT may be established between the network port of the USB communication module 34 and the network port of the Wi-Fi communication module 33, so that the data supporting the Ethernet protocol is transmitted between the USB communication module 34 and the Wi-Fi communication module 33 based on the established connection relationship.

For example, in the example shown in Fig. 6, by S103, a second connection relationship is established between the Wi-Fi communication module 34 and the Wi-Fi communication module 33 within the data transmission apparatus 3, and the second connection relationship is implemented in a wireless communication manner, so that the second connection relationship is identified in Fig. 6 by a dashed connection line between the two.

S 104. The electronic apparatus 1 sends a Dynamic Host Configuration Protocol (DHCP) request to the interactive white board 4 by controlling the USB communication module 34.

Wherein after the electronic apparatus 1 is connected to the USB communication module 34, in order to use the USB communication module 34 for the Ethernet protocol communication, the electronic apparatus 1 may request the interactive white board 4 to assign an Internet Protocol address (IP address) to the electronic apparatus 1 by sending a DHCP request to the interactive white board 4. In one embodiment, the electronic apparatus 1 may specifically control, through the connection line 2 and the USB communication interface 31, the USB communication module 34 to send the DHCP request to the interactive white board 4, or control the USB communication module 34 to send the DHCP request to the interactive white board 4 through the bridged Wi-Fi communication module 33.

S105. The interactive white board 4 assigns an IP address to the electronic apparatus 1, and sending the IP address to the electronic apparatus 1.

Wherein after receiving the DHCP request sent by the electronic apparatus, the interactive white board 4 assigns an IP address to the electronic apparatus 1 and sends the IP address to the electronic apparatus 1. After receiving the IP address sent by the interactive white board 4, the electronic apparatus 1 can execute the flow of sending data to the interactive white board 4 through the Ethernet protocol in the subsequent S106-S108.

S106. The electronic apparatus 1 sends, specifically based on the first connection relationship with the USB communication module 34, the media data to the Wi-Fi communication module 33 using the Ethernet protocol by controlling the USB communication module 34. In S106, the electronic apparatus 1 may send the media data to the USB communication module 34 through the USB connection line 2, and correspondingly, the USB communication module 34 receives the media data sent by the electronic apparatus 1. At this point, the electronic apparatus 1 is equivalent to using the USB communication module 34 as a USB network card as an interface for outputting the media data, and the underlying protocol between the electronic apparatus 1 and the USB communication module 34 still adopts the USB protocol, so that the electronic apparatus 1 sends the media data to the USB communication module 34 via the USB connection cable 2 with the USB protocol, and controls the USB communication module to send the media data to the Wi-Fi communication module 33 with the Ethernet protocol.

S107. The USB communication module 34 forwards, specifically based on a second connection relationship with the Wi-Fi communication module 33, the media data received in S106 directly to the Wi-Fi communication module 33 using the Ethernet protocol under the control of the electronic apparatus 1. In S107, the USB communication module 34 at the application level, which is equivalent to a network card of the electronic apparatus 1, sends the media data of the electronic apparatus 1 directly to the Wi-Fi communication module 33, without modifying the protocol format of the transmitted media data in the process. Correspondingly, the Wi-Fi communication module 33 receives the media data sent by the USB communication module 34 through the Ethernet protocol.

S108. The Wi-Fi communication module 33 directly sends, based on a third connection relationship with the interactive white board 4, media data to the interactive white board 4 through the Ethernet protocol. In S108, the Wi-Fi communication module 33 also does not modify the protocol format of the transmitted media data, which means that the Wi-Fi communication module 33 functions as a relay between the USB communication module 34 and the interactive white board 4. After receiving the media data, the interactive white board 4 may directly perform processing such as decoding and rendering on the media data and display/play it.

In summary, in the data transmission method according to this embodiment, by providing a USB communication module and a Wi-Fi communication module that both support the Ethernet protocol in the data transmission apparatus, after the USB communication module is connected to the electronic apparatus, the electronic apparatus can use the USB communication module to transmit the media data to the Wi-Fi communication module with the Ethernet protocol, and then the Wi-Fi communication module sends the media data to the interactive white board with the Ethernet protocol for screen projection display. Since the electronic apparatus can directly control the USB communication module to send the media data supporting the Ethernet protocol, the data transmission apparatus does not need to perform conversion from the USB protocol to the Ethernet protocol on the media data in the embodiment shown in Fig. 2 to Fig. 3 in the entire process of each transmission of media data. Thus, compared with the embodiment shown in Fig. 2 to Fig. 3, the time when the data transmission apparatus transmits the media data can be reduced, the time delay when the data transmission apparatus transmits the media data each time can be reduced, thereby improving the transmission efficiency of the data transmission apparatus when transmitting the media data. Meanwhile, since the data transmission apparatus omits the protocol conversion step, the possibility of error when performing protocol conversion on the media data can be reduced, thereby improving the transmission quality of the media data transmitted by the data transmission apparatus. In addition, in this embodiment, the architecture of adding a USB communication module to the data transmission apparatus is simple and easy to implement, and can be flexibly implemented in the form of hardware or software, and after being configured once, it can be used every time the media data is transmitted subsequently.

In addition, based on the way in which the electronic apparatus 1 uses the USB communication module 34 in the data transmission apparatus 3 for data transmission in this application embodiment, when the electronic apparatus 1 is provided with a USB network card, the data transmission apparatus 3 may not be provided with the USB communication module 34, but directly use the USB network card in the electronic apparatus 1 as the USB communication module 34 in the embodiment, and after establishing a second connection relationship with the Wi-Fi communication module in the data transmission apparatus 3 through a bridge/NAT, the electronic apparatus 1 directly controls the USB communication module to transmit the media data to the interactive white board using the Ethernet protocol based on the second connection relationship and the third connection relationship. The specific implementation is the same as the principle, and is not repeated here.

In the foregoing embodiments, the data transmission method according to the embodiment of the present disclosure is introduced. In order to implement various functions in the method according to the above embodiment of the present disclosure, the electronic apparatus and the data transmission apparatus as execution bodies may include a hardware structure and/or a software module, and implement the above various functions in the form of a hardware structure, a software module, or a hardware structure plus software module. Some function of the above various functions is executed in the form of the hardware structure, the software module, or the hardware structure plus software module, depending on specific application sand design constraints of the technical solution.

For example, the data transmission apparatus shown in Fig. 4 may be configured to perform the data transmission method in the above embodiment, the first communication module may be configured to acquire the media data from the electronic apparatus and send the media data to the second communication module using the first communication protocol, and the second communication module may be configured to receive the media data and send the media data to the interactive white board using the first communication protocol. For details, reference may be made to the embodiment shown in Fig. 5, and details are not repeated again.

For another example, the present disclosure further provides an electronic apparatus, which may be configured to perform the data transmission method performed by the electronic apparatus in the above embodiment, and may comprise a communication interface and a processing module. The communication interface may be a USB communication interface which may be configured to be connected to the first communication module of the data transmission apparatus through a USB connection line. The processing module may be a processor such as a CPU. When the communication interface of the electronic apparatus is connected to the first communication module of the data transmission apparatus via the USB connection line, the processing module may be configured to determine that the communication interface is connected to the first communication module of the data transmission apparatus, and control, by the communication interface, the first communication module to send the media data to the second communication module using the first communication protocol, so that the second communication module sends the media data to the interactive white board using the first communication protocol. For details, reference may be made to the embodiment shown in Fig. 5, and details are not repeated again.

It should be noted that, it should be understood that the division of the modules of the above device is merely a logical function division, and in actual implementation, the modules may be in whole or in part integrated into one physical entity, or may be physically separated. And these modules can be in whole implemented in the form of calling software by processing elements, or can be in whole implemented in the form of hardware; or can be in part implemented in the form of calling software by processing elements, and in part implemented in the form of hardware. It may be a separately provided processing element, or may be integrated into some chip of the above device for implementation, or may be stored in a memory of the above device in the form of program codes and called and executed by some processing element of the above device to execute the functions of the above determined module. The implementation of other modules is similar to this. In addition, these modules can be in whole or in part integrated together or implemented independently. The processing element described herein may be an integrated circuit having signal processing capability. In the process of implementation, the steps of the above method or the above modules may be accomplished by an integrated logic circuit of hardware in the processor element or instructions in the form of software.

For example, the above modules may be one or more integrated circuits configured to implement the above method, such as one or more application specific integrated circuits (ASICs), or one or more microprocessors (digital signal processors, DSPs), or one or more field programmable gate arrays (FPGAs), or the like. For another example, when one of the above modules is implemented in the form of scheduling program codes by a processing element, the processing element may be a general purpose processor, such as a central processing unit (CPU) or other processors that may call program codes. For another example, these modules can be integrated and implemented in the form of a system-on-a-chip (SOC).

In the above embodiments, the modules can be in whole or in part implemented by software, hardware, firmware, or any combination thereof. When implemented using software, the modules may be in whole or in part implemented in the form of a computer program product. The computer program product comprises one or more computer instructions. When the computer program instructions are loaded and executed on a computer, the flow or function according to the embodiments of the present disclosure is generated in whole or in part. The computer may be a general purpose computer, a special purpose computer, a computer network, or other programmable devices. The computer instructions may be stored in a computer-readable storage medium, or transmitted from a computer-readable storage medium to another computer-readable storage medium. For example, the computer instructions may be transmitted from one website, computer, server or data center to another website, computer, server or data center via a wired manner (e.g., coaxial cable, optical fiber, digital subscriber line (DSL)) or wireless manner (e.g., infrared, wireless, microwave, etc.). The computer-readable storage medium may be any usable medium that can be accessed by a computer, or a data storage apparatus comprising a server, a data center, or the like integrated by one or more usable media. The usable medium may be a magnetic medium (e.g., a floppy disk, a hard disk, a magnetic tape), an optical medium (e.g., a DVD), or a semiconductor medium (e.g., a solid state disk (SSD)), or the like.

The present disclosure further provides an electronic apparatus, comprising a processor, a memory and a computer program; wherein the computer program is stored in the memory and configured to be executed by the processor, and the computer program comprises instructions for executing a data transmission method executed by the electronic apparatus according to any one of the foregoing embodiments of the present disclosure.

The present disclosure further provides a data transmission apparatus, comprising a processor, a memory and a computer program; wherein the computer program is stored in the memory and configured to be executed by the processor, and the computer program comprising instructions for executing a data transmission method executed by the data transmission apparatus according to any one of the foregoing embodiments of the present disclosure.

The present disclosure further provides a computer-readable storage medium that stores a computer program, wherein the computer program causes a server to execute instructions of a data transmission method executed by an electronic apparatus according to any one of the foregoing embodiments of the present disclosure; or the computer program causes the server to execute instructions of a data transmission method executed by a data transmission apparatus according to any one of the foregoing embodiments of the present disclosure.

The embodiment of the present disclosure further provides a chip for executing an instruction, wherein the chip is configured to execute a method executed by an electronic apparatus according to any one of the foregoing embodiments of the present disclosure; or the chip is configured to execute a method executed by a data transmission apparatus according to any one of the foregoing embodiments of the present disclosure.

The embodiment of the present disclosure further provides a program product, comprising a computer program stored in a storage medium, from which at least one processor may read the computer program, wherein the at least one processor executing the computer program, may implement a data transmission method executed by an electronic apparatus according to any one of the foregoing embodiments of the present disclosure; or the at least one processor, when executing the computer program, may implement a data transmission method executed by a data transmission apparatus according to any one of the foregoing embodiments of the present disclosure.

Those of ordinary skill in the art will appreciate that all or part of the steps to implement the above method embodiments may be accomplished by hardware related to program instructions. The foregoing program may be stored in a computer readable storage medium. When the program is executed, the steps including the above method embodiments are executed. The foregoing storage medium includes various media that can store program codes, such as a ROM, a RAM, a magnetic disk, or an optical disk.

Finally, it should be noted that the above embodiments are merely intended to describe the technical solutions of the present disclosure and not to limit them. Although the present disclosure is described in detail with reference to the foregoing embodiments, those of ordinary skill in the art should understand that the technical solutions described in the foregoing embodiments may still be modified, or some or all of the technical features thereof may be equivalently substituted, and these modifications or substitutions do not deviate the nature of the respective technical solutions from the scope of the technical solutions of the embodiments of the present disclosure.

## Claims

1. A data transmission method applied to a data transmission apparatus, wherein the data transmission apparatus comprises a first communication module and a second communication module, both the first communication module and the second communication module transmit data using a first communication protocol; the method comprises:
the first communication module acquiring media data from an electronic apparatus;
the first communication module sending the media data to the second communication module using the first communication protocol; and
the second communication module receiving the media data, and sending the media data to an interactive white board using the first communication protocol.

2. The method according to claim 1, wherein,
the first communication module comprises a USB network card, the USB network card is connected to the electronic apparatus via a USB connection line;
the first communication module acquiring the media data from the electronic apparatus comprises:
the USB network card receiving the media data sent by the electronic apparatus via the USB connection line.

3. The method according to claim 1 or 2, wherein,
the first communication protocol comprises an Ethernet communication protocol;
a communication connection relationship of bridge or network address translation NAT is established between the first communication module and the second communication module.

4. A data transmission method applied to an electronic apparatus, wherein the electronic apparatus is configured to send media data to a data transmission apparatus so that the data transmission apparatus transmits the media data to an interactive white board, the data transmission apparatus comprises a first communication module and a second communication module, both the first communication module and the second communication module transmit data using a first communication protocol; the method comprises:
determining that the electronic apparatus is connected to the first communication module of the data transmission apparatus; and
controlling the first communication module to send the media data to the second communication module using the first communication protocol, so that the second communication module sends the media data to the interactive white board using the first communication protocol.

5. The method according to claim 4, wherein,
the first communication module comprises a USB network card, the electronic apparatus is connected to the USB network card via a USB connection line;
determining that the electronic apparatus is connected to the first communication module of the data transmission apparatus comprises:
detecting, through USB enumeration, that the electronic apparatus is connected to the USB network card of the data transmission apparatus via the USB connection line.

6. The method according to claim 5, wherein controlling the first communication module to send the media data to the second communication module using the first communication protocol comprises:
sending the media data to the first communication module via the USB connection line, and controlling the first communication module to send the media data to the second communication module using the first communication protocol.

7. The method according to any one of claims 4 to 6, wherein,
the first communication protocol comprises an Ethernet communication protocol.

8. The method according to claim 7, wherein after determining that the electronic apparatus is connected to the first communication module of the data transmission apparatus, the method further comprises:
controlling the first communication module to send a dynamic host configuration protocol DHCP to the interactive white board; and
receiving, by the first communication module, an IP address assigned to the electronic apparatus by the interactive white board, wherein the IP address is used by the electronic apparatus to control the first communication module to transmit data using the Ethernet communication protocol.

9. A data transmission apparatus, comprising:
a first communication module, configured to acquire media data from an electronic apparatus, and send the media data to a second communication module using a first communication protocol;
the second communication module, configured to receive the media data and send the media data to an interactive white board using the first communication protocol.

10. An electronic apparatus, comprising:
a communication interface, configured to communicate with a first communication module of a data transmission apparatus;
a processing module, configured to determine that the communication interface is connected to the first communication module of the data transmission apparatus, and control, by the communication interface, the first communication module to send media data to a second communication module using a first communication protocol, so that the second communication module sends the media data to an interactive white board using the first communication protocol.

11. A data transmission system, comprising:
an electronic apparatus and a data transmission apparatus;
wherein the data transmission apparatus comprises a first communication module and a second communication module, both the first communication module and the second communication module transmit data using a first communication protocol;
the electronic apparatus is configured to connect the first communication module of the data transmission apparatus and control the first communication module to send media data to the second communication module using the first communication protocol;
the data transmission apparatus is configured to send, by the second communication module, the media data to an interactive white board using the first communication protocol.
